# EUROPEAN PATENT SPECIFICATION

(11) **EP 1 264 862 B1**
(45) Date of publication and mention of the grant of the patent: **14.12.2005**
(21) Application number: 02252392.2
(22) Date of filing: 02.04.2002
(51) Int. Cl.: C08L 83/04, H01R 13/52

(54) **Holder for waterproof connector and process for the production thereof**
Halter für wasserdichten Verbinder und Verfahren zur Herstellung
Support pour un connecteur étanche à l' eau et procédé de fabrication

(30) Priority: 02.04.2001 JP 2001103576
(43) Date of publication of application: 11.12.2002
(73) Proprietor: YAZAKI CORPORATION, Minato-ku, Tokyo (JP)
(72) Inventor: Suguyama, Osamu, c/o Yazaki Parts Co., Ltd., Haibara-gun, Shizuoka (JP); Nagano, Masao, c/o Yazaki Parts Co., Ltd., Haibara-gun, Shizuoka (JP)
(74) Representative: Brunner, Michael John

(56) References cited:
- EP-A- 0 752 450
- US-A- 4 842 540
- US-A- 5 334 039
- US-A- 5 668 225
- US-A- 5 989 704

## Description

The present invention relates to a holder for automobile waterproof connector or the like comprising a holder portion made of a resin and a packing portion made of a gel-like material for keeping a waterproof connector having the terminal portion of an electric wire with a terminal inserted therein watertight at the electric wire side opening thereof.

Various structures have heretofore been proposed for waterproofing a waterproof connector having an electric wire with terminal inserted in the interior thereof at the electric wire side thereof.

For example, a technique involving the sealing with a resin, a technique involving the utilization of the elasticity of a rubber packing for waterproof, etc. have been known.

Among these techniques are a technique involving the use of a gel-like material proposed in JP-W-6-501341. In accordance with this technique, a packing material having a gel-like material provided between two restraint layers is set in a box-shaped rear holder. When the packing material is made of a gel-like material comprising silicone, the resulting packing material is excellent in properties such as vibration absorption, electrical characteristics, heat resistance and water resistance. These properties are particularly useful for automobile waterproof connector, which is subject to vibration and heat history in engine room, etc.

However, this technique is disadvantageous in that since the rear holder and the packing material are not formed integrally, many steps are required for the connector assembly. This technique is also disadvantageous in that since the packing material itself ' consists of three members, it adds to cost.

The invention is to provide a novel holder for waterproof connector which can be easily obtained by insert molding involving the integral formation of a packing portion made of a gel-like material with a rear holder portion made of a resin as an insert so that no troubles can occur during molding and exhibits a small permanent compression set and a process for the production thereof.

In order to solve the aforementioned problems, the holder for waterproof connector of the invention is a holder for waterproof connector comprising a holder portion made of a resin and a packing portion made of a gel-like material for keeping a waterproof connector having the terminal portion of an electric wire with a terminal inserted therein watertight at the electric wire side thereof, wherein the packing portion made of a gel-like material is obtained by hardening a silicone composition containing all of the following components (A) to (D):
(A) an organopolysiloxane having at least two alkenyl groups per molecule in an amount of 100 parts by weight;
(B) an organopolysiloxane having at least two hydrogen atoms having a silicon atom bonded thereto per molecule in an amount such that the amount of the hydrogen atom having a silicon atom bonded thereto in the component (B) is from not smaller than 0.5 mols to not greater than 10 mols per mol of the alkenyl group in the component (A) ;
(C) an organopolysiloxane free of alkenyl group and hydrogen atom having a silicon atom bonded thereto in its molecule in an amount of from not smaller than 100 parts by weight to not greater than 500 parts by weight; and
(D) a platinum-based hardening catalyst; according to the invention.

In this arrangement, the holder for waterproof connector of the invention is not subject to defect during mold release, assuring stable waterproof characteristic.

According further to the invention, the mechanical strength of the packing portion made of a gel-like material in the holder for waterproof connector according to the invention can be enhanced by incorporating a particulate silica (E) in the silicone composition in an amount of from 1 to 100 parts by weight based on 100 parts by weight of the component (A) besides the components (A) to (D) . In this arrangement, even when the molded packing portion is in a shape such that it cannot be released from the mold, it can be easily and surely released from the mold.

According further to the invention, when the packing portion made of a gel-like material in the holder for waterproof connector of the invention has an Asker C hardness of from 1 ( to 30 (, it has an optimum hardness as a packing and thus provides the holder with an extremely high waterproof characteristic.

According further to the invention, the process for the production of a holder for waterproof connector of the invention is a process for the production of a holder for waterproof connector comprising a holder portion made of a resin and a packing portion made of a gel-like material for keeping a waterproof connector having the terminal portion of an electric wire with a terminal inserted therein watertight at the electric wire side thereof which comprises inserting a holder portion made of a resin which has been previously formed into a mold as an insert, introducing a silicone composition comprising all of the following components (A) to (D) :
(A) an organopolysiloxane having at least two alkenyl groups per molecule in an amount of 100 parts by weight;
(B) an organopolysiloxane having at least two hydrogen atoms having a silicon atom bonded thereto per molecule in an amount such that the amount of the hydrogen atom having a silicon atom bonded thereto in the component (B) is from not smaller than 0.5 mols to not greater than 10 mols per mol of the alkenyl group in the component (A) ;
(C) an organopolysiloxane free of alkenyl group and hydrogen atom having a silicon atom bonded thereto in its molecule in an amount of from not smaller than 100 parts by weight to not greater than 500 parts by weight; and
(D) a platinum-based hardening catalyst;
into a cavity defined by the mold and the holder portion, and then hardening the silicone composition so that it is molded integrally with the holder portion. In accordance with this production process, a holder having a packing portion made of a gel-like material formed integrally therewith which can be easily assembled to a connector can be invariably molded in a good yield. Further, troubles such as attachment and remaining of gel-like material to the mold and nonreleasability don't occur. Thus, the occurrence of troubles can be prevented also during production.

### In the accompanying drawings:-

Fig. 1 is a perspective view of a model of the rear holder portion to be used in the invention;
Fig. 2 is a perspective view of a model illustrating an example of the holder for waterproof connector of the invention;

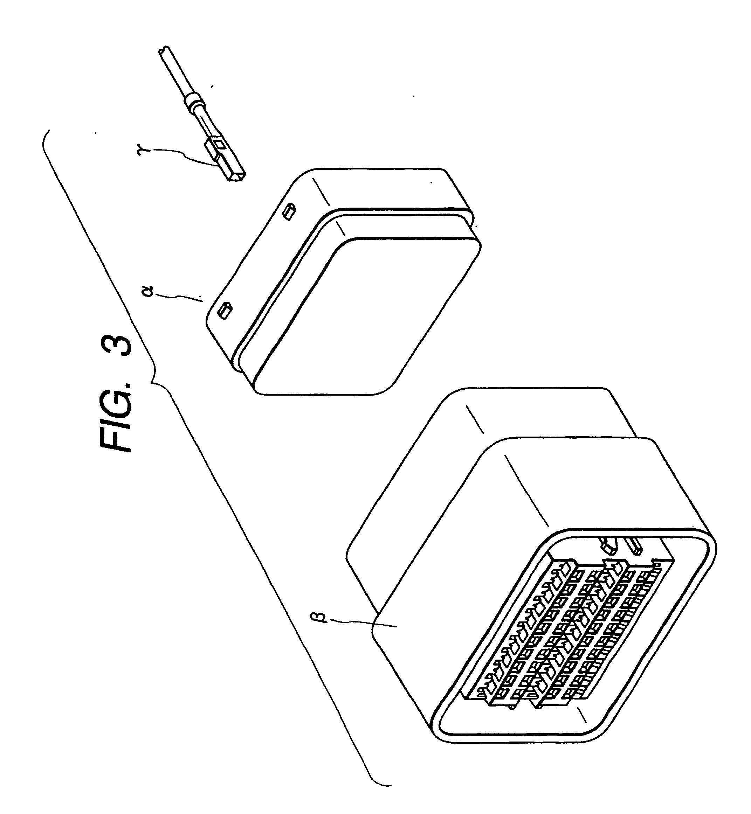

Fig. 3 is a perspective view of a model illustrating an assembly image of the waterproof connector comprising an example of the holder for waterproof connector of the invention; and
Figs. 4A and 4B are diagrams of a model illustrating a method for evaluating the waterproof characteristic of a holder for waterproof connector.

In the holder for waterproof connector of the invention, the resin forming the holder portion needs to be a resin which exhibits an excellent adhesivity to silicone gel and a sufficient heat resistance under molding conditions for insert molding of the packing portion. Holders for waterproof connector are normally divided into two groups, i.e., rear holder and front holder. The invention relates these holders.

As such a resin there may be used an ordinary olefin-polymerized thermoplastic resin or condensation polymerization thermoplastic resin. Specific examples of these resins include ABS (acrylonitrile-butadiene-styrene copolymer) resin, styrene resin, polyethylene resin, polypropylene resin, acrylic resin, polycarbonate resin, polyethylene terephthalate resin, polybutylene terephthalate resin, polyphenylene oxide resin, polyphenylene sulfide resin, polystyrene resin, polyamide (nylon) resin, liquid crystal resin, and mixture thereof.

When the packing portion made of a gel-like material is molded integrally with the holder portion made of such a resin as an insert, the adhesivity between the packing portion and the holder portion thus molded is sufficiently high, causing no problems of peeling of these elements off each other. Further, since the packing portion thus molded can be easily released from the mold, no problems occur during the release of the integrally molded holder for waterproof connector from the mold.

In the invention, the packing portion made of a gel-like material needs to be obtained by hardening a silicone composition comprising at least all of the following four starting materials:
(A) an organopolysiloxane having at least two alkenyl groups per molecule in an amount of 100 parts by weight;
(B) an organopolysiloxane having at least two hydrogen atoms having a silicon atom bonded thereto per molecule in an amount such that the amount of the hydrogen atom having a silicon atom bonded thereto in the component (B) is from not smaller than 0.5 mols to not greater than 10 mols per mol of the alkenyl group in the component (A);
(C) an organopolysiloxane free of alkenyl group and hydrogen atom having a silicon atom bonded thereto in its molecule in an amount of from not smaller than 100 parts by weight to not greater than 500 parts by weight; and
(D) a platinum-based hardening catalyst.

The organopolysiloxane as the component (A) is a main component of the silicone composition to be used in the invention and needs to have at least two alkenyl groups per molecule.

Examples of the alkenyl group include vinyl group, allyl group, butenyl group, pentenyl group, and hexenyl group. Examples of the organic group to be bonded to silicon atom other than the alkenyl group in the component (A) include alkyl group such as methyl group, ethyl group and propyl group, aryl group such as phenyl group and tollyl group, and halogenated alkyl group such as 3,3,3-trifluoropropyl group. Examples of the molecular structure of the component (A) include straight chain, straight chain partly having branches, branched chain, network, and tree. The viscosity of the component (A) at a temperature of 25° C is not specifically limited but is preferably from 100 mPa · s to 1,000,000 mPa · s.

Examples of the organopolysiloxane as the component (A) include dimethyl polysiloxane blocked by dimethyl vinyl siloxy group at both ends of molecular chain, dimethyl siloxane-methyl vinyl siloxane copolymer blocked by dimethyl vinyl siloxy group at both ends of molecular chain, dimethyl siloxane-methyl vinyl siloxane copolymer blocked by trimethyl siloxy group at both ends of molecular chain, organopolysiloxane comprising siloxane unit represented by the general formula (CH₃)₃SiO_{1/2}, siloxane unit represented by the general formula (CH₃)₂ (CH2=CH) SiO_{1/2} and siloxane unit represented by the general formula SiO_{4/2}, organopolysiloxane obtained by substituting some or all of the methyl groups in these organopolysiloxanes by an alkyl group such as ethyl group and propyl group, aryl group such as phenyl group and tollyl group or halogenated alkyl group such as 3,3,3-trifluoropropyl group, organopolysiloxane obtained by substituting some or all of the vinyl groups in these organopolysiloxanes by an allyl group or alkenyl group such as propenyl, and mixture of two or more of these organopolysiloxanes.

The organopolysiloxane as the component (B) is a hardener for the silicone composition to be used in the invention and needs to have at least two hydrogen atoms having a silicon atom bonded thereto per molecule.

Examples of the organic group to be connected to the silicon atom in the component (B) include alkyl group such as methyl group, ethyl group and propyl group, aryl group such as phenyl group and tollyl group, and halogenated alkyl group such as 3,3,3-trifluoropropyl group. Examples of the molecular structure of the component (B) include straight chain, straight chain partly having branches, branched chain, network, and tree. The viscosity of the component (B) at a temperature of 25(C is not specifically limited but is preferably from 100 mPa · s to 1,000,000 mPa · s.

Examples of the organopolysiloxane as the component (B) include dimethyl polysiloxane blocked by dimethyl hydrogen siloxy group at both ends of molecular chain, methyl hydrogen polysiloxane blocked by trimethyl siloxy group at both ends of molecular chain, dimethyl siloxane-methyl hydrogen siloxane copolymer blocked by trimethyl siloxy group at both ends of molecular chain, cyclic methyl hydrogen polysiloxane, organopolysiloxane comprising siloxane unit represented by the general formula (CH₃)₃SiO_{1/2} and siloxane unit represented by the general formula SiO_{4/2}, organopolysiloxane obtained by substituting some or all of the methyl groups in these organopolysiloxanes by an alkyl group such as ethyl group and propyl group, aryl group such as phenyl group and tollyl group or halogenated alkyl group such as 3,3,3-trifluoropropyl group, and mixture of two or more of these organopolysiloxanes.

The content of the component (B) in the silicone composition to be used in the invention is such that the amount of the hydrogen having a silicon atom bonded thereto in the component (B) is from 0.5 to 10 mols, preferably from 1.0 to 5.0 mols per mol of the alkenyl group in the component (A) . This is because when the content of the component (B) falls below the lower limit of the above defined range, it gives a tendency that the silicone gel composition thus obtained is insufficiently hardened. On the contrary, when the content of the component (B) exceeds the upper limit of the above defined range, it gives a tendency that the silicone gel thus obtained exhibits a raised adhesivity to the mold and hence a deteriorated mold releasability.

The organopolysiloxane as the component (C) is a component for enhancing the mold releasability of the silicone gel obtained by hardening the silicone composition to be used in the invention and providing the silicone gel with a sufficient flexibility while keeping the permanent compression set thereof low and needs to be free of alkenyl group and hydrogen atom having a silicon atom bonded thereto in its molecule.

Examples of the organic group to be connected to the silicon atom in the component (C) include alkyl group such as methyl group, ethyl group and propyl group, aryl group such as phenyl group and tollyl group, and halogenated alkyl group such as 3,3,3-trifluoropropyl group.

Examples of the molecular structure of the component (C) include straight chain, straight chain partly having branches, branched chain, network, and tree. The viscosity of the component (C) at a temperature of 25° C is not specifically limited but is preferably from 50 mPa · s to 50,000 mPa · s. This is because when the viscosity of the component (C) falls below the lower limit of the above defined range, it gives a tendency that the component (C) can easily vaporize from the silicone gel thus obtained. On the contrary, when the viscosity of the component (C) exceeds the upper limit of the above defined range, it gives a tendency that the silicone gel thus obtained exhibits a raised adhesivity to the mold.

Examples of the organopolysiloxane as the component (C) include dimethyl polysiloxane blocked by trimethyl siloxy group at both ends of molecular chain, dimethyl siloxane-methyl phenyl siloxane copolymer blocked by trimethyl siloxy at both ends of molecular chain, dimethyl siloxane-diphenyl siloxane copolymer blocked by trimethyl siloxy group at both ends of molecular chain, dimethyl polysiloxane blocked by dimethyl phenyl siloxy group at both ends of molecular chain, dimethyl siloxane-methyl phenyl siloxane copolymer blocked by dimethyl phenyl siloxy group at both ends of molecular chain, and mixture of two or more of these organopolysiloxanes.

The content of the component (C) in the silicone composition to be used in the invention is from 100 to 500 parts by weight, preferably from 100 to 300 parts by weight based on 100 parts by weight of the component (A) . This is because when the content of the component (C) falls below the lower limit of the above defined range, it gives a tendency that the silicone gel thus obtained exhibits a deteriorated mold releasability. On the contrary, when the content of the component (C) exceeds the upper limit of the above defined range, it gives a tendency that the silicone gel thus obtained exhibits a deteriorated mechanical strength.

The platinum-based hardening catalyst as the component (D) is a catalyst for accelerating the hardening of the silicone composition to be used in the invention. Examples of the catalyst to be used in the invention include platinum catalysts such as particulate platinum, platinum black, chloroauric acid, platinum tetrachloride, alcohol solution of chloroauric acid, platinum olefin complex, platinum alkenylsiloxane complex and platinum carbonyl complex, and other catalysts such as rhodium catalyst and palladium catalyst.

The content of the component (D) in the silicone composition to be used in the invention is not specifically limited but is preferably such that the amount of the platinum group metal in the component (D) is from 0.1 to 500 parts by weight based on 1,000,000 parts by weight of the component (A).

The silicone composition to be used in the invention may further comprise a particulate silica incorporated therein as a component (E) besides the aforementioned components (A) to (D) to enhance the mechanical strength of the silicone gel thus obtained. Examples of the component (E) include fumed silica, precipitated silica, calcined silica, ground quartz, and particulate material obtained by the surface treatment of such a particulate silica with an organic silicon compound such as organoalkoxysilane, organohalosilane and organosilazalane. In order to sufficiently enhance the mechanical strength of the silicone gel thus obtained, it is particularly preferred that as the component (E) there be used a particulate silica having a BET specific surface area of not smaller than 50 m²/g.

The content of the component (E) in the silicone composition to be used in the invention is arbitrary. In order to enhance the mechanical strength of the silicone gel thus obtained, the content of the component (E) in the silicone composition is preferably from 1 to 100 parts by weight, more preferably from 1 to 50 parts by weight based on 100 parts by weight of the component (A).

The silicone composition to be used in the invention may comprise other arbitrary components incorporated therein so far as the aim of the invention doesn't fail. Examples of such an arbitrary component include inorganic fillers such as fumed titanium oxide, carbon black, diatomaceous earth, iron oxide, aluminum oxide, aluminosilicate and calcium carbonate, fillers obtained by treating these fillers with the aforementioned silicon compounds, alkyne alcohols such as 3-methyl-1-butyne-ol, 3,5-dimethyl-1-hexyne-3-ol and 3-phenyl-1-butyne-3-ol, enine compounds such as 3-methyl-3-pentene-1-ine and 3,5-dimethyl-3-hexene-1-ine, hardening retarders such as tetramethylhexenyl cyclotetrasiloxane and benzotriazole, permanent compression set improvers such as phthalocyanine copper and chlorinated phthalocyanine copper, reinforcement providers, viscosity modifiers, heat resistance providers, fire retardance providers, heat-conductive fillers, electrical conductivity providers, and adhesivity providers.

The process for the preparation of the silicone composition to be used in the invention is not limited. The silicone composition of the invention can be prepared by mixing the components (A) to (D) and the arbitrary components. In the case where the silicone composition comprises the component (E), it is preferred that to a silicone gel base prepared by heating the components (A) and (E) with stirring be added the components (B) to (D) or to a silicone gel base prepared by heating the component (A), a part or whole of the component (C) and component (E) with stirring be added the component (B), the residual part of the component (C) and the component (D). In the case where it is necessary that the other arbitrary components be added, they may be added during the preparation of the silicone gel base. In the case where these arbitrary components are subject to denaturation on heating with stirring, they may be added during the addition of the component (B) or (D). Alternatively, the aforementioned organic silicon compound may be added during the preparation of the silicone gel base to treat the surface of the component in situ.

The silicone composition to be used in the invention is hardened to form a silicone gel having an excellent mold releasability and a small permanent compression set. The hardness of the silicone gel is not limited but is preferably from 0° to 30°, more preferably from 1° to 30° as calculated in terms of Asker C hardness. For the measurement of Asker C hardness, an Asker C hardness meter corresponding to the spring hardness tester defined in JIS S6050 (1994) can be used.

The holder for waterproof connector of the invention is a holder for waterproof connector comprising a holder portion made of a resin and a packing portion made of a gel-like material for keeping a waterproof connector having the terminal portion of an electric wire with a terminal inserted therein watertight at the electric wire side thereof. The holder for waterproof connector of the invention may be formed integrally with the connector housing as a part of the connector housing with a flexible connecting portion interposed therebetween. This case, too, is included in the scope of the invention.

### Example

The holder for waterproof connector of the invention will be further described in the following examples. The viscosity value in the following examples were measured at 25°C.

### Example 1

100 parts by weight of a dimethyl siloxane-methyl vinyl siloxane copolymer blocked by trimethyl siloxy group at both ends of molecular chain having a viscosity of 10,000 mPa·s, 40 parts by weight of a fumed silica having a BET specific surface area of 200m²/g, 5 parts by weight of hexamethyl disilazalane as a silica treatment and 2 parts by weight of water were mixed, and then heated with stirring under reduced pressure to prepare a liquid silicone gel base.

Subsequently, 140 parts by weight of the aforementioned liquid silicone gel base, 230 parts by weight of a dimethyl polysiloxane blocked by trimethyl siloxy group at both ends of molecular chain having a viscosity of 3,000 mPa · s, a dimethyl siloxane-methyl hydrogen siloxane copolymer blocked by trimethyl siloxy group at both ends of molecular chain having a viscosity of 10 mPa · s (in an amount such that the amount of the hydrogen atom having a silicon atom bonded thereto is 1.6 mols per mol of the vinyl group in the dimethyl siloxane-methyl vinyl siloxane copolymer contained in the aforementioned silicone gel base), 1,3-divinyltetramethyl disiloxane complex of platinum (in an amount such that the amount of the platinum group metal is 35 parts by weight based on 1,000,000 parts by weight of the dimethyl siloxane-methyl vinyl siloxane copolymer in the aforementioned silicone gel base), and 0.12 parts by weight of 3,5-dimethyl-1-hexyne-3-ol were mixed to prepare a silicone gel composition.

The silicone gel obtained by hardening the silicone gel composition was then measured for Asker C hardness and permanent compression set in the following manner. The packing portion made of the silicone gel obtained by hardening the silicone gel composition was measured for mold releasability and confirmed for adhesivity to the rear holder portion. The results of evaluation are set forth in Table 1.

### Method for the evaluation of mold releasability

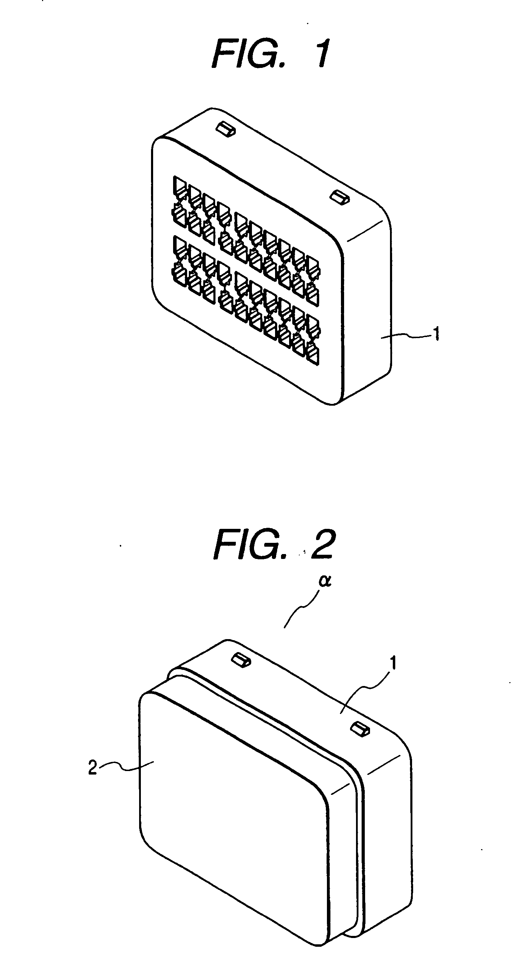

Casting was made in a steel mold having a cavity allowing the formation of a holder for waterproof connector having a rear holder and a packing portion made of a gel-like material formed integrally therewith as shown in Fig. 2 with rear holder portions (made of a polybutylene terephthalate resin (hereinafter also referred to as "PBT") or polyethylene terephthalate resin (hereinafter also referred to as "PET") the form of which is typically shown in Fig. 1, respectively, put as an insert. The material thus casted was then press-hardened at a temperature of 150° C for 10 minutes. It was then evaluated whether or not the holder for waterproof connector thus obtained can be easily withdrawn from the mold. The size of the packing portion was 15 mm x 15 mm x 4 mm.

On the other hand, the hardness of the silicone gel which had been separately press-hardened (primary vulcanization) was measured by an Asker C hardness meter. The hardness of the silicone gel which had been heated at a temperature of 200° C for 4 hours secondary vulcanization) was then measured for hardness.

The silicone gel composition was hardened at a temperature of 150° C for 10 minutes to prepare a test piece for the measurement of permanent compression set according to the method defined in JIS K 6249. The test piece thus prepared was then subjected to secondary vulcanization at a temperature of 200° C for 4 hours. The test piece which had been compressed at a temperature of 150° C for 70 hours was then measured for permanent compression set according to the method defined in JIS K 6249.

### Comparative Example 1

140 parts by weight of a liquid silicone gel base prepared in the same manner as in Example 1, 100 parts by weight of a dimethyl polysiloxane blocked by dimethyl vinyl siloxy group at both ends of molecular chain having a viscosity of 40,000 mPa · s, a dimethyl siloxane-methyl hydrogen siloxane copolymer blocked by trimethyl siloxy group at both ends of molecular chain having a viscosity of 10 mPa · s (in an amount such that the amount of the hydrogen atom having a silicon atom bonded thereto is 0.5 mols per mol of the vinyl group in the dimethyl siloxane-methyl vinyl siloxane copolymer contained in the aforementioned silicone gel base), 1,3-divinyltetramethyl disiloxane complex of platinum (in an amount such that the amount of the platinum group metal is 10 parts by weight based on 1,000,000 parts by weight of the dimethyl siloxane-methyl vinyl siloxane copolymer in the aforementioned silicone gel base), and 0.1 parts by weight of 3,5-dimethyl-1-hexyne-3-ol were mixed to prepare a silicone gel composition. The silicone gel obtained by hardening the silicone gel composition was then measured for Asker C hardness and permanent compression set in the same manner as in Example 1. Casting was then made with the two same rear holder portions as used in Example 1 (rear holder made of polybutylene terephthalate resin and rear holder made of polyethylene terephthalate resin), respectively, put in the mold as an insert to form holders for waterproof connector each integrated with a packing portion. These holders were each then evaluated for mold releasability and adhesivity to the rear holder. The results are set forth in Table 1.

### Comparative Example 2

140 parts by weight of a liquid silicone gel base prepared in the same manner as in Example 1, 70 parts by weight of a dimethyl polysiloxane blocked by trimethyl siloxy group at both ends of molecular chain having a viscosity of 3,000 mPa · s, a dimethyl siloxane-methyl hydrogen siloxane copolymer blocked by trimethyl siloxy group at both ends of molecular chain having a viscosity of 10 mPa · s (in an amount such that the amount of the hydrogen atom having a silicon atom bonded thereto is 0.9 mols per mol of the vinyl group in the dimethyl siloxane-methyl vinyl siloxane copolymer contained in the aforementioned silicone gel base), 1,3-divinyltetramethyl disiloxane complex of platinum (in an amount such that the amount of the platinum group metal is 10 parts by weight based on 1,000,000 parts by weight of the dimethyl siloxane-methyl vinyl siloxane copolymer in the aforementioned silicone gel base), and 0.1 parts by weight of 3,5-dimethyl-1-hexyne-3-ol were mixed to prepare a silicone gel composition. The silicone gel obtained by hardening the silicone gel composition was then measured for Asker C hardness and permanent compression set in the same manner as in Example 1. Casting was then made with the same rear holder portion as used in Example 1 put in the mold as an insert to form a holder for waterproof connector integrated with a packing portion. The holder was then evaluated for mold releasability and adhesivity to the rear holder. The results are set forth in Table 1.

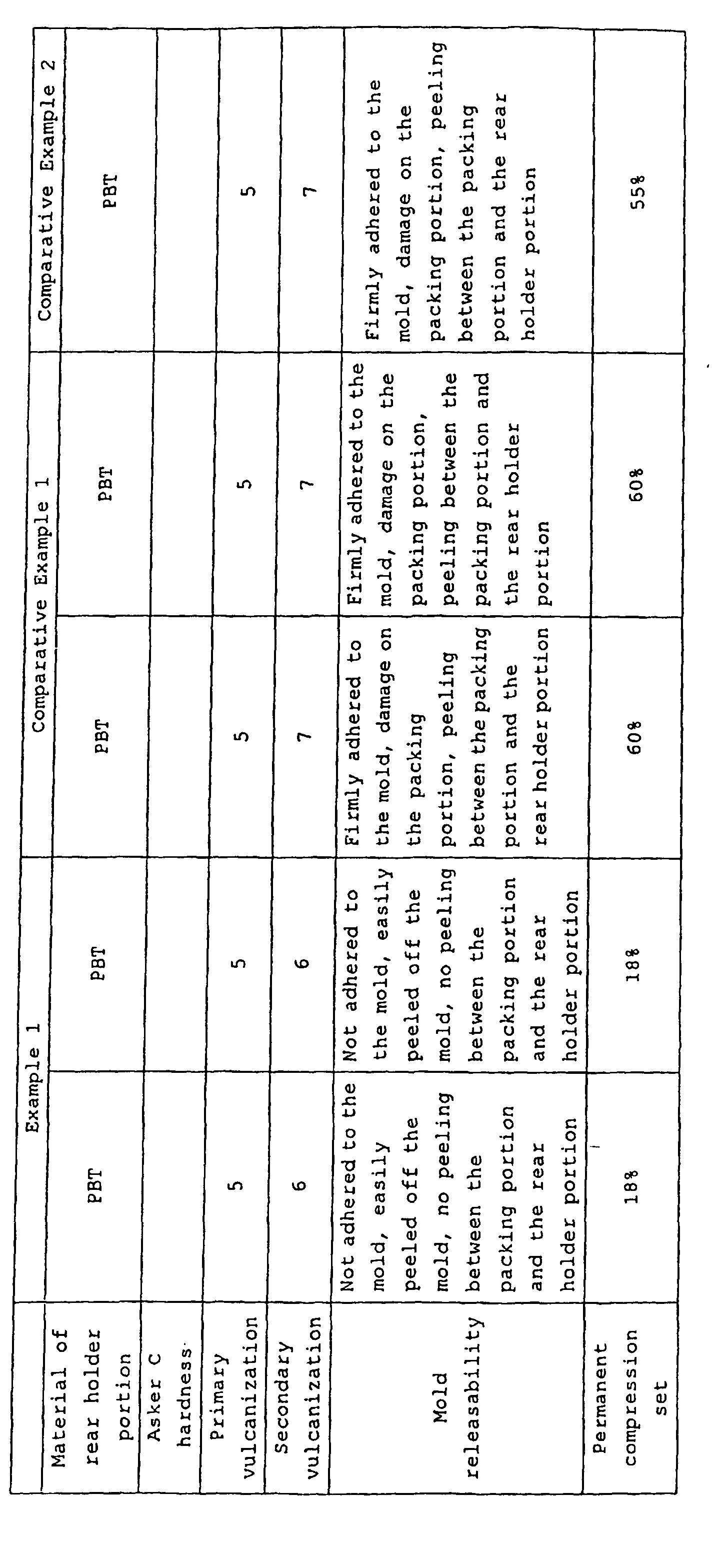

### Example 2

100 parts by weight of a dimethyl polysiloxane blocked by dimethyl vinyl siloxy group at both ends of molecular chain having a viscosity of 10,000 mPa · s and 20 parts by weight of a fumed silica having a BET specific surface area of 200 m2/g surface-treated with dimethyl dichlorosilane were mixed, and then heated with stirring under reduced pressure to prepare a liquid silicone gel base.

Subsequently, 120 parts by weight of the aforementioned liquid silicone gel base, 140 parts by weight of a dimethyl polysiloxane blocked by trimethyl siloxy group at both ends of molecular chain having a viscosity of 100 mPa · s, a dimethyl siloxane-methyl hydrogen siloxane copolymer blocked by trimethyl siloxy group at both ends of molecular chain having a viscosity of 5 mPa · s (in an amount such that the amount of the hydrogen atom having a silicon atom bonded thereto is 1.4 mols per mol of the vinyl group in the dimethyl polysiloxane contained in the aforementioned silicone gel base), 1,3-divinyltetramethyl disiloxane complex of platinum (in an amount such that the amount of the platinum group metal is 35 parts by weight based on 1,000,000 parts by weight of the dimethyl polysiloxane in the aforementioned silicone gel base), 0.12 parts by weight of 3,5-dimethyl-1-hexyne-3-ol, and 1 part by weight of a particulate phthalocyanine copper were mixed to prepare a silicone gel composition.

The silicone gel obtained by hardening the silicone gel composition was then measured for Asker C hardness and permanent compression set in the following manner. The holders for waterproof connector which had been molded integrally with a packing portion with the same two rear holders as used in Example 1, respectively, put as an insert were each evaluated for mold releasability and adhesivity to rear holder in the following manner. The results of evaluation are set forth in Table 2.

### Mold releasability

Casting was made in a chromium-plated steel mold having a cavity allowing the formation of a holder for waterproof connector having a rear holder and a packing portion made of a gel-like material formed integrally therewith as shown in Fig. 2 with the same two rear holder portions as used in Example 1, i.e., rear holder made of a polybutylene terephthalate resin and rear holder made of a polyethylene terephthalate resin, respectively, put as an insert. The material thus casted was then hardened at a temperature of 120° C for 10 minutes. It was then evaluated whether or not the holder for waterproof connector thus obtained can be easily withdrawn from the mold.

### Asker C hardness

The hardness of the silicone gel which had been press-hardened (primary vulcanization) was measured by means of an Asker C hardness meter.

### Permanent compression set

The silicone gel composition was hardened at a temperature of 120° C for 10 minutes to prepare a test piece for the measurement of permanent compression set according to the method defined in JIS K 6249. The test piece which had been compressed at a temperature of 150° C for 70 hours was then measured for permanent compression set according to the method defined in JIS K 6249.

### Comparative Example 3

120 parts by weight of a liquid silicone gel base prepared in the same manner as in Example 2, 100 parts by weight of a dimethyl polysiloxane blocked by dimethyl vinyl siloxy group at both ends of molecular chain having a viscosity of 10,000 mPa · s, a dimethyl siloxane-methyl hydrogen siloxane copolymer blocked by trimethyl siloxy group at both ends of molecular chain having a viscosity of 5 mPa · s (in an amount such that the amount of the hydrogen atom having a silicon atom bonded thereto is 0.6 mols per mol of the vinyl group in the dimethyl polysiloxane contained in the aforementioned silicone gel base), 1,3-divinyltetramethyl disiloxane complex of platinum (in an amount such that the amount of the platinum group metal is 10 parts by weight based on 1,000,000 parts by weight of the dimethyl polysiloxane in the aforementioned silicone gel base), 0.1 parts by weight of 3,5-dimethyl-1-hexyne-3-ol, and 1 part by weight of a particulate phthalocyanine copper were mixed to prepare a silicone gel composition.

The silicone gel obtained by hardening the silicone gel composition was then measured for Asker C hardness and permanent compression set in the same manner as in Example 2. The results are set forth in Table 2.

### Comparative Example 4

120 parts by weight of a liquid silicone gel base prepared in the same manner as in Example 2, 50 parts by weight of a dimethyl polysiloxane blocked by trimethyl siloxy group at both ends of molecular chain having a viscosity of 100 mPa · s, a dimethyl siloxane-methyl hydrogen siloxane copolymer blocked by trimethyl siloxy group at both ends of molecular chain having a viscosity of 5 mPa · s (in an amount such that the amount of the hydrogen atom having a silicon atom bonded thereto is 0.9 mols per mol of the vinyl group in the dimethyl polysiloxane contained in the aforementioned silicone gel base), 1,3-divinyltetramethyl disiloxane complex of platinum (in an amount such that the amount of the platinum group metal is 10 parts by weight based on 1,000,000 parts by weight of the dimethyl polysiloxane in the aforementioned silicone gel base), 0.1 parts by weight of 3, 5-dimethyl-1-hexyne-3-ol, and 1 part by weight of a particulate phthalocyanine copper were mixed to prepare a silicone gel composition.

The silicone gel obtained by hardening the silicone gel composition was then measured for mold releasability, Asker C hardness and permanent compression set in the same manner as in Example 2. Casting was then made with the same rear holder portion made of a polybutylene terephthalate as used in Example 1 put in the mold as an insert to form a holder for waterproof connector integrated with a packing portion. The holder was then evaluated for mold releasability and adhesivity to the rear holder. The results are set forth in Table 2.

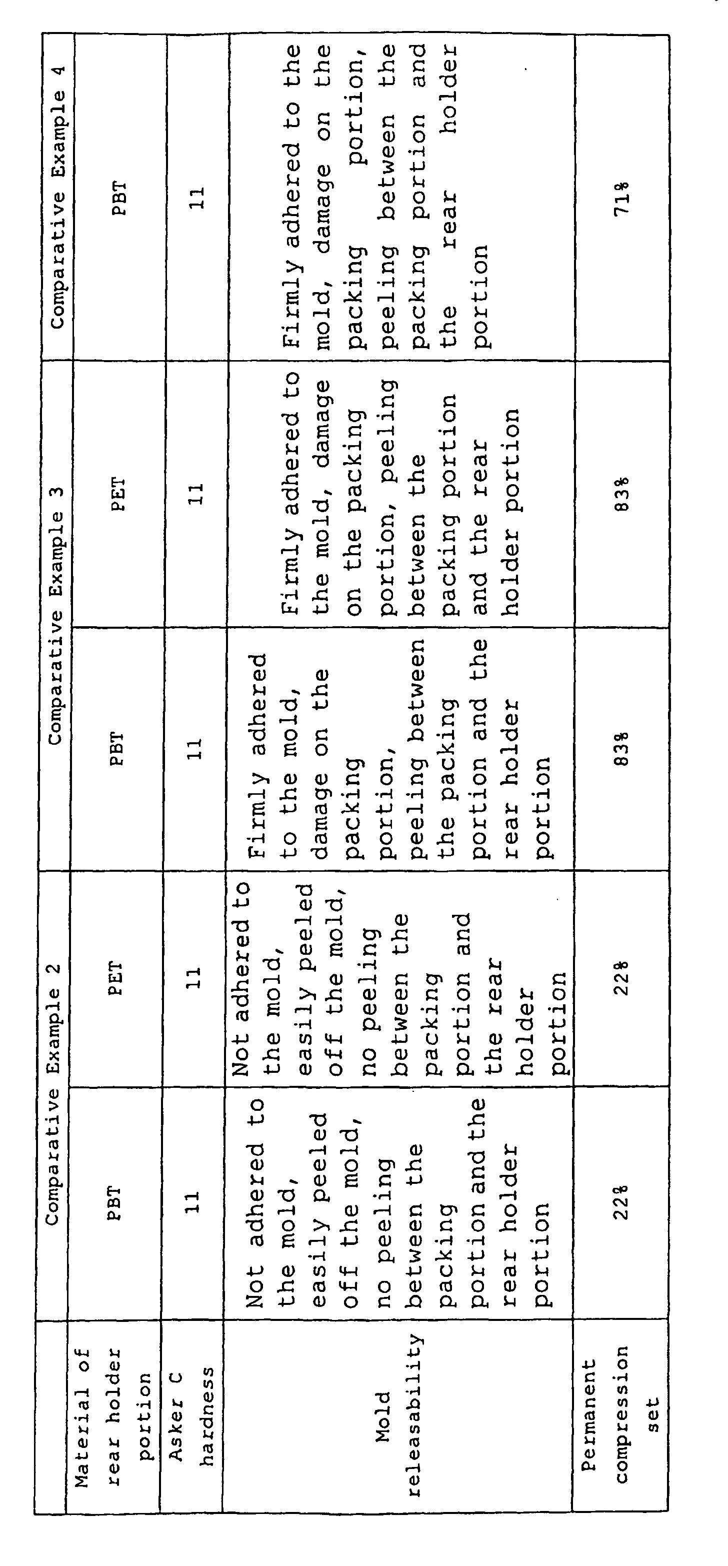

### Evaluation of durability as connector

The holder for waterproof connector comprising a rear holder portion (made of a polybutylene terephthalate) and a packing portion formed integrally therewith obtained in Example 1 and a holder for waterproof connector having the same shape as that of Example 1 comprising a rear connector portion made of the same material as that of Example 1 and a packing portion made of a silicone gel according to the related art (produced by Raychem Co., Ltd.) were each evaluated for waterproof characteristic before and after heat history.

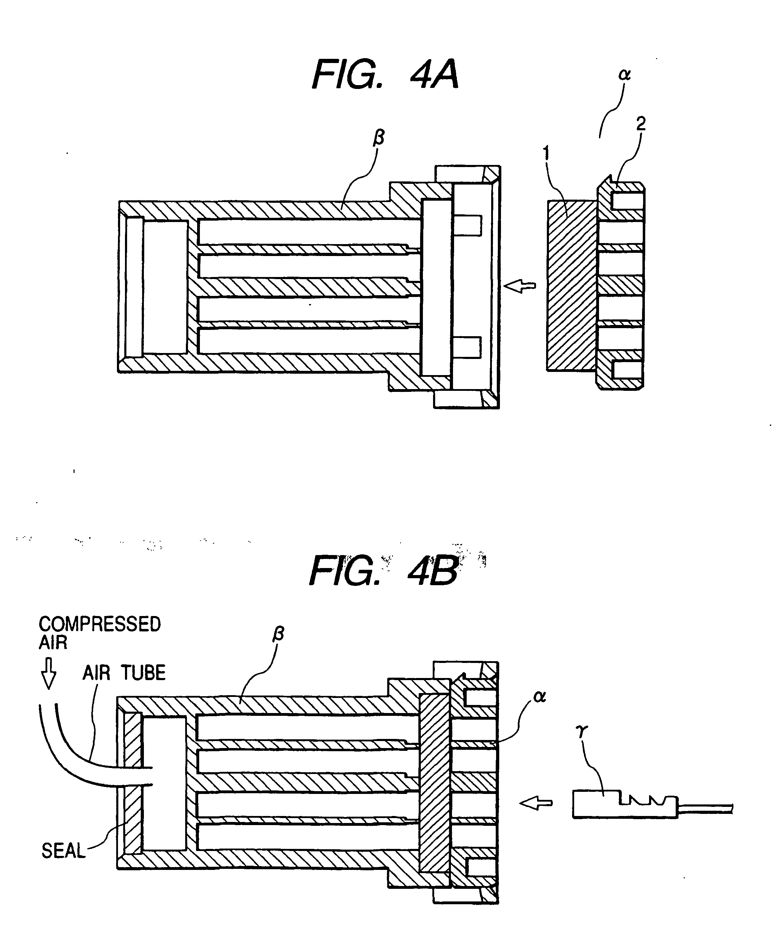

As shown in Fig. 4, these holders for waterproof connector were each mounted in a waterproof connector housing β. A terminal with electric wire γ was then inserted into the holder. A sample which had the terminal with electric wire γ left inserted therein and a sample which had the terminal with electric wire γ inserted therein after five repetition of insertion and withdrawal were prepared.

An air tube was inserted into the waterproof connector housing β at the side thereof for connecting to the counterpart connector. The waterproof connector housing β was then water-tightly sealed at this side with a resin.

These samples were each immersed in water, and then examined for inner pressure at which air leak occurs through the gap between the electric wire and the packing portion when compressed air is introduced into the housing through the air tube. When the inner pressure is not lower than 200 kPa, the test sample is judged to have a sufficient watertightness.

After examined for watertightness, these samples were each subjected to heat history at 150° C for 120 hours, and then again examined for watertightness.

| | Holder for waterproof connector of Example 1 was used | | Holder for waterproof connector according to the related art was used |
|---|---|---|---|
| | Inserted once | Inserted five times | Inserted once |
| Before heat history | Not lower than 200 kPa | Not lower than 200 kPa | 110-170 |
| After heat history | Not lower than 200 kPa | Not lower than 200 kPa | 10 - 60 |

As can be seen in Table 3, the use of the rear holder for waterproof connector according to the invention makes it possible to provide a high waterproof characteristic even after the repetition of insertion of electric wire with terminal and maintain the high waterproof characteristic even after heat history.

The holder for waterproof connector of the invention is a holder for waterproof connector excellent in durability and heat history resistance which can be produced under stable conditions due to the excellent mold releasability of its packing portion, exhibits an excellent adhesivity to covered wire due to the adhesivity of the packing portion, exhibits an excellent durability due to the small permanent compression set of the packing portion, requires no extra step such as inspection after production due to no occurrence of damage on the packing portion during production and requires less steps necessary for the production of connector due to the integration of the packing portion with the rear holder portion.

## Claims

1. A holder for waterproof connector comprising:
a holder portion made of a resin and a packing portion made of a gel-like material for keeping a waterproof connector having the terminal portion of an electric wire with a terminal inserted therein watertight at the electric wire side thereof, said packing portion made of a gel-like material being obtained by hardening a silicone composition containing the following components (A) to (D) :
(A) an organopolysiloxane having at least two alkenyl groups per molecule in an amount of 100 parts by weight;
(B) an organopolysiloxane having at least two hydrogen atoms having a silicon atom bonded thereto per molecule in an amount such that the amount of the hydrogen atom having a silicon atom bonded thereto in the component (B) is from not smaller than 0.5 mols to not greater than 10 mols per mol of the alkenyl group in the component (A) ;
(C) an organopolysiloxane free of alkenyl group and hydrogen atom having a silicon atom bonded thereto in its molecule in an amount of from not smaller than 100 parts by weight to not greater than 500 parts by weight; and
(D) a platinum-based hardening catalyst.

2. The holder for waterproof connector according to Claim 1, wherein said silicone composition further includes a particulate silica (E) incorporated therein in an amount of from 1 to 100 parts by weight based on 100 parts by weight of the component (A) besides the components (A) to (D).

3. The waterproof connector according to Claim 1, wherein said packing portion made of a gel-like material exhibits an Asker C hardness of from 1° to 30°.

4. The waterproof connector according to Claim 2, wherein said packing portion made of a gel-like material exhibits an Asker C hardness of from 1° to 30°.

5. A process for the production of a holder for waterproof connector comprising a holder portion made of a resin and a packing portion made of a gel-like material for keeping a waterproof connector having the terminal portion of an electric wire with a terminal inserted therein watertight at the electric wire side thereof, comprising the steps of:
inserting a holder portion made of a resin which has been previously formed into a mold as an insert,
introducing a silicone composition comprising all of the following components (A) to (D) into a cavity defined by said mold and said holder portion:
(A) an organopolysiloxane having at least two alkenyl groups per molecule in an amount of 100 parts by weight;
(B) an organopolysiloxane having at least two hydrogen atoms having a silicon atom bonded thereto per molecule in an amount such that the amount of the hydrogen atom having a silicon atom bonded thereto in the component (B) is from not smaller than 0.5 mols to not greater than 10 mols per mol of the alkenyl group in the component (A);
(C) an organopolysiloxane free of alkenyl group and hydrogen atom having a silicon atom bonded thereto in its molecule in an amount of from not smaller than 100 parts by weight to not greater than 500 parts by weight; and
(D) a platinum-based hardening catalyst; and
hardening said silicone composition so that the packing portion is molded integrally with said holder portion.

## Patentansprüche

1. Halter für einen wasserfesten Steckverbinder umfassend:
einen Halterabschnitt aus einem Harz und einen Dichtungsabschnitt aus einem gelartigen Material zum Halten eines wasserfesten Steckverbinders, in dem der Anschlussabschnitt eines elektrischen Drahtes mit einem darin eingesetzten Anschluss an der Seite des elektrischen Drahtes davon wasserdicht ist, wobei der Dichtungsabschnitt aus einem gelartigen Material durch Härten einer Silikonzusammensetzung erhalten wird, die die folgenden Bestandteile (A) bis (D) enthält:
(A) ein Organopolysiloxan, das pro Molekül mindestens zwei Alkenylgruppen in einer Menge von 100 Gewichtsteilen aufweist;
(B) ein Organopolysiloxan, das mindestens zwei Wasserstoffatome aufweist, an die pro Molekül ein Silikonatom in einer derartigen Menge gebunden ist, dass die Menge des Wasserstoffatoms, an das in Bestandteil (B) ein Silikonatom gebunden ist, nicht kleiner als 0,5 Mol bis nicht größer als 10 Mol pro Mol der Alkenylgruppe in Bestandteil (A) ist;
(C) ein Organopolysiloxan, das frei von Alkenylgruppen und Wasserstoffatomen ist und an das in seinem Molekül ein Silikonatom in einer Menge gebunden ist, die nicht kleiner als 100 Gewichtsteile bis nicht größer als 500 Gewichtsteile ist; und
(D) ein auf Platin basierender, härtender Katalysator.

2. Halter für einen wasserfesten Steckverbinder nach Anspruch 1, wobei die Silikonzusammensetzung ferner ein Quarzmehl (E) enthält, das neben den Bestandteilen (A) bis (D) basierend auf 100 Gewichtsteilen des Bestandteils (A) darin in einer Menge von 1 bis 100 Gewichtsteilen aufgenommen ist.

3. Wasserfester Steckverbinder nach Anspruch 1, wobei der Dichtungsabschnitt aus einem gelartigen Material eine Asker-C-Härte von 1 ° bis 30 ° zeigt.

4. Wasserfester Steckverbinder nach Anspruch 2, wobei der Dichtungsabschnitt aus einem gelartigen Material eine Asker-C-Härte von 1 ° bis 30 ° zeigt.

5. Verfahren zur Herstellung eines Halters für einen wasserfesten Steckverbinder umfassend einen Halterabschnitt aus einem Harz und einen Dichtungsabschnitt aus einem gelartigen Material zum Halten eines wasserfesten Steckverbinders, in dem der Anschlussabschnitt eines elektrischen Drahtes mit einem darin eingesetzten Anschluss an der Seite des elektrischen Drahtes davon wasserdicht ist, umfassend die folgenden Schritte:
Einsetzen eines Halterabschnitts aus Harz, der vorher als Einsatz in einer Gussform geformt wurde,
Einführen einer Silikonzusammensetzung, die alle der folgenden Bestandteile (A) bis (D) enthält, in einen Hohlraum, der von der Gussform und dem Halterabschnitt definiert wird:
(A) ein Organopolysiloxan, das pro Molekül mindestens zwei Alkenylgruppen in einer Menge von 100 Gewichtsteilen aufweist;
(B) ein Organopolysiloxan, das mindestens zwei Wasserstoffatome aufweist, an die pro Molekül ein Silikonatom in einer derartigen Menge gebunden ist, dass die Menge des Wasserstoffatoms, an das in Bestandteil (B) ein Silikonatom gebunden ist, nicht kleiner als 0,5 Mol bis nicht größer als 10 Mol pro Mol der Alkenylgruppe in Bestandteil (A) ist;
(C) ein Organopolysiloxan, das frei von Alkenylgruppen und Wasserstoffatomen ist und an das in seinem Molekül ein Silikonatom in einer Menge gebunden ist, die nicht kleiner als 100 Gewichtsteile bis nicht größer als 500 Gewichtsteile ist; und
(D) ein auf Platin basierender, härtender Katalysator; und
Härten der Silikonzusammensetzung, so dass der Dichtungsabschnitt mit dem Halterabschnitt einstückig geformt wird.

## Revendications

1. Support pour un connecteur étanche à l'eau, comprenant :
une partie support faite en résine et une partie conditionnement faite en un matériau de type gel pour maintenir un connecteur étanche à l'eau ayant la partie terminale d'un fil électrique avec un terminal qui y est inséré étanche à l'eau du côté fil électrique, ladite partie conditionnement faite en un matériau de type gel étant obtenue par durcissement d'une composition de silicone contenant les composants suivants (A) à (D) :
(A) un organopolysiloxane ayant au moins deux groupes alcényle par molécule en une quantité de 100 parties en poids ;
(B) un organopolysiloxane ayant au moins deux atomes d'hydrogène ayant un atome de silicium qui y est lié par molécule en une quantité telle que la quantité d'atomes d'hydrogène ayant un atome de silicium qui y est lié dans le composant (B) se situe dans une plage de pas moins de 0,5 mole à pas plus de 10 moles par mole de groupe alcényle dans le composant (A) ;
(C) un organopolysiloxane dépourvu de groupe alcényle et d'atome d'hydrogène ayant un atome de silicium qui y est lié dans sa molécule en une quantité qui est dans une plage de pas moins de 100 parties en poids à pas plus de 500 parties en poids ; et
(D) un catalyseur de durcissement à base de platine.

2. Support pour connecteur étanche à l'eau selon la revendication 1, dans lequel ladite composition de silicone comprend en outre une silice particulaire (E) qui y est incorporée en une quantité de 1 à 100 parties en poids sur la base de 100 parties en poids du composant (A), hormis les composants (A) à (D).

3. Connecteur étanche à l'eau selon la revendication 1, dans lequel ladite partie conditionnement faite en un matériau de type gel présente une dureté C de Asker de 1° à 30°.

4. Connecteur étanche à l'eau selon la revendication 2, dans lequel ladite partie conditionnement faite en un matériau de type gel présente une dureté C de Asker de 1° à 30°.

5. Procédé pour la production d'un support pour un connecteur étanche à l'eau comprenant une partie support faite en résine et une partie conditionnement faite en matériau de type gel pour maintenir le connecteur étanche à l'eau ayant la partie terminale d'un fil électrique avec un terminal qui y est inséré étanche à l'eau du côté du fil électrique de celle-ci, comprenant les étapes consistant à :
insérer une partie support faite en une résine qui a été au préalable formée dans un moule sous la forme d'un insert,
introduire une composition de silicone comprenant tous les composants suivants (A) à (D) dans une cavité définie par ledit moule et ladite partie support :
(A) un organopolysiloxane ayant au moins deux groupes alcényle par molécule en une quantité de 100 parties en poids ;
(B) un organopolysiloxane ayant au moins deux atomes d'hydrogène ayant un atome de silicium qui y est lié par molécule en une quantité telle que la quantité d'atomes d'hydrogène ayant un atome de silicium qui y est lié dans le composant (B) se situe dans une plage de pas moins de 0,5 mole à pas plus de 10 moles par mole de groupe alcényle dans le composant (A) ;
(C) un organopolysiloxane dépourvu de groupe alcényle et d'atome d'hydrogène ayant un atome de silicium qui y est lié dans sa molécule en une quantité qui est dans une plage de pas moins de 100 parties en poids à pas plus de 500 parties en poids ; et
(D) un catalyseur de durcissement à base de platine ; et
durcir ladite composition de silicone de sorte que la partie conditionnement soit moulée intégralement avec ladite partie support.
